# EUROPEAN PATENT APPLICATION

(11) **EP 4 254 641 A1**
(43) Date of publication of application: **04.10.2023**
(21) Application number: 21958959.5
(22) Date of filing: 30.09.2021
(51) Int. Cl.: H01M 50/533

(54) **BATTERY CELL, BATTERY, ELECTRIC DEVICE, AND METHOD AND DEVICE FOR MANUFACTURING BATTERY CELL**

(71) Applicant: Contemporary Amperex Technology Co., Limited, Fujian PRC 352100 (CN)
(72) Inventor: LIN, Wenfa, Ningde, Fujian 352000 (CN); YU, Mingxi, Ningde, Fujian 352000 (CN); HUANG, Ning, Ningde, Fujian 352000 (CN)
(74) Representative: Gong, Jinping
(86) International application number: PCT/CN2021/122378
(87) International publication number: WO 2023/050388

(57) **Abstract**

Embodiments of this application provide a battery cell, a battery, an electric device, and a manufacturing method and device of battery cell. The battery cell includes: an electrode assembly including a body and a tab; and a connecting part including a terminal connecting portion and a tab connecting portion, where the terminal connecting portion is configured to connect an electrode terminal, the tab connecting portion is configured to connect the tab, and the tab connecting portion has a first surface facing the body; where the tab includes a first section connected to the body, a second section fixed on the first surface, and a corner section connected between the first section and the second section, and the corner section exceeds the first surface in a direction from the body toward the connecting part. The battery cell has high energy density.

## Description

### TECHNICAL FIELD

This application relates to the field of battery technologies, and in particular, to a battery cell, a battery, an electric device, and a manufacturing method and device of battery cell.

### BACKGROUND

Energy conservation and emission reduction are crucial to sustainable development of the automobile industry. Electric vehicles, with their advantages in energy conservation and emission reduction, have become an important part of sustainable development of the automobile industry. For electric vehicles, battery technology is an important factor in connection with their development.

In the development of battery technology, in addition to safety improvement, energy density is another non-negligible issue. Therefore, how energy density of batteries is enhanced is an urgent technical problem that needs to be solved in battery technology.

### SUMMARY

This application is intended to provide a battery cell, a battery, an electric device, and a manufacturing method and device of battery cell. The battery cell has high energy density.

This application is implemented using the following technical solutions.

According to a first aspect, this application provides a battery cell, including:
an electrode assembly, including a body and a tab; and
a connecting part, including a terminal connecting portion and a tab connecting portion, where the terminal connecting portion is configured to connect an electrode terminal, the tab connecting portion is configured to connect the tab, and the tab connecting portion has a first surface facing the body;
where the tab includes a first section connected to the body, a second section fixed on the first surface, and a corner section connected between the first section and the second section, and the corner section exceeds the first surface in a direction from the body toward the connecting part.

For the battery cell according to this application, the corner section exceeds the first surface in the direction from the body toward the connecting part, so that part of the tab is accommodated in space of the first surface away from the body, so as to reduce space occupied by the tab on a side of the first surface close to the body, thereby reducing distance between the body and the connecting part, which makes all parts more compact and improves volumetric energy density.

According to some embodiments of this application, in the direction from the body toward the connecting part, the corner section exceeds a second surface of the tab connecting portion away from the body.

In the foregoing solution, the corner section exceeds the second surface, so that more part of the tab is accommodated in the space of the first surface away from the body, which further reduces the distance between the body and the connecting part and further increases space proportion of the body, that is, increasing proportions of positive and negative electrode active substances, so as to increase energy density of the battery cell.

According to some embodiments of this application, an included angle between the corner section and the second section is an obtuse angle.

In the foregoing solution, a disposition manner of the corner section and the second section makes interference between the connecting part and the corner section less, which reduces damage of the connecting part to the tab and facilitates bending of the tab.

According to some embodiments of this application, the battery cell further includes a housing, including an accommodating chamber, where at least part of the connecting part and the electrode assembly are accommodated in the accommodating chamber; and the connecting part further has an end surface in a thickness direction of the electrode assembly, and the corner section is located between the end surface and an inner wall of the housing.

In the foregoing solution, the corner section being disposed between the end surface and the inner wall of the housing properly uses internal space of the accommodating chamber and reduces space occupation, thereby ensuring that the battery cell has high energy density.

According to some embodiments of this application, the battery cell further includes: an end cover sealing the housing; and an insulator, where at least part of the insulator is disposed between the end cover and the connecting part to isolate the end cover from the connecting part.

In the foregoing solution, the insulator is used to isolate the end cover from the connecting part to avoid internal short circuit, thereby guaranteeing safety of the battery cell.

According to some embodiments of this application, a flange protruding toward the body is formed on an edge of the insulator in the thickness direction of the electrode assembly, and the flange is located between the corner section and the housing.

In the foregoing solution, the flange being located between the corner section and the housing can isolate the corner section from the housing to avoid internal short circuit, thereby guaranteeing safety of the battery cell.

According to some embodiments of this application, thickness of the tab is A, and distance between the end surface and the flange is B, where 1%≤A/B≤20%.

In the foregoing solution, the above value range can not only facilitate reducing difficulty of bending the tab, but also facilitate accommodation of the corner section.

According to some embodiments of this application, the corner section abuts against a side of the insulator facing away from the end cover.

In the foregoing solution, the corner section abutting against the insulator can further reduce the distance between the body and the connecting part, so that the battery cell has high energy density.

According to some embodiments of this application, a round corner or an elastic member is provided at an intersection of the first surface and the end surface.

In the foregoing solution, the round corner or elastic member provided at the intersection of the first surface and the end surface can buffer friction between the tab and the connecting part and prevent the tab from being cut, thereby guaranteeing service life of the battery cell.

According to some embodiments of this application, the terminal connecting portion protrudes relative to a side of the tab connecting portion facing away from the body.

In the foregoing solution, the terminal connecting portion protruding relative to the tab connecting portion not only facilitates connection with the electrode terminal, but also avoids protruding toward the body which occupies internal space of the battery cell, thereby guaranteeing energy density of the battery cell.

According to a second aspect, this application provides a battery, including the battery cell according to any one of the foregoing solutions.

According to a third aspect, this application provides an electric device, including the battery cell according to any one of the foregoing solutions, where the battery cell is configured to supply electrical energy.

According to a fourth aspect, this application provides a manufacturing method of battery cell, including:
providing an electrode assembly, where the electrode assembly includes a body and a tab, and the tab includes a first section, a second section, and a corner section connected between the first section and the second section;
providing a connecting part, where the connecting part includes a terminal connecting portion and a tab connecting portion, and the tab connecting portion has a first surface facing the body;
providing an electrode terminal;
fixing the second section on the first surface and bending the tab so that the corner section exceeds the first surface in a direction from the body toward the connecting part; and
connecting the terminal connecting portion to the electrode terminal.

According to a fifth aspect, this application provides a manufacturing method of battery cell, including:
a providing module, configured to provide an electrode assembly, provide a connecting part, and provide an electrode terminal, where the electrode assembly includes a body and a tab, and the tab includes a first section, a second section, and a corner section connected between the first section and the second section; and the connecting part includes a terminal connecting portion and a tab connecting portion, and the tab connecting portion has a first surface facing the body; and
an assembling module, configured to fix the second section on the first surface, bend the tab so that the corner section exceeds the first surface in a direction from the body toward the connecting part, and connect the terminal connecting portion to the electrode terminal.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a cross-sectional view of a battery cell according to some embodiments of this application;
FIG. 5 is a partial view of FIG. 4;
FIG. 6 is a first enlarged view of position C in FIG. 5;
FIG. 7 is a second enlarged view of position C in FIG. 5;
FIG. 8 is a schematic structural diagram of a connecting part according to some embodiments of this application;
FIG. 9 is a sectional view in the D-D direction in FIG. 8;
FIG. 10 is a first enlarged view of position E in FIG. 9;
FIG. 11 is a second enlarged view of position E in FIG. 9;
FIG. 12 is a schematic flowchart of a manufacturing method of battery cell according to some embodiments of this application; and
FIG. 13 is a schematic block diagram of a manufacturing device of battery cell according to some embodiments of this application.

In the accompanying drawings, the figures are not drawn to scale.

Reference signs: 100. battery; 101. box; 1011. first portion; 1012. second portion; 10. battery cell; 11. end cover; 12. housing; 121. accommodating chamber; 13. electrode assembly; 131. body; 132. tab; 1321. first section; 1322. second section; 1323. corner section; 14. connecting part; 141. terminal connecting portion; 142. tab connecting portion; 1421. first surface; 1422. second surface; 143. end surface; 144. round corner; 145. elastic member; 15. electrode terminal; 16. insulator; 161. flange; 17. adhesive tape; 200. controller; 300. motor; and 1000. vehicle.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in this application as appropriate to specific situations.

The battery mentioned in this application is a single physical module that includes one or more battery cells for providing a higher voltage and capacity. For example, the battery mentioned in this application may include a battery module, a battery pack, or the like.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied onto a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied onto a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of PP (polypropylene, polypropylene), PE (polyethylene, polyethylene), or the like.

For the development of battery technology, many design factors need to be considered, for example, performance parameters such as discharge capacity, charge and discharge rate, safety, and service life, as well as energy density.

For a battery cell, there are many factors that affect energy density, such as proportions of positive and negative electrode active substances and specific capacities of positive and negative electrode materials. The inventors have found through research that, in a battery cell, in a direction from a body of an electrode assembly toward a connecting part, a corner of a tab does not exceed a surface of the connecting part facing the body of the electrode assembly, so that distance between the connecting part and the body of the electrode assembly is large and proportions of positive and negative electrode active substances are low, which wastes internal space of the battery cell and results in low utilization of the internal space, leading to low energy density.

In view of this, to resolve the problem of low energy density, through in-depth research, the inventors have designed a battery cell. The battery cell includes an electrode assembly and a connecting part. The electrode assembly includes a body and a tab. The connecting part includes a terminal connecting portion and a tab connecting portion, where the terminal connecting portion is configured to connect an electrode terminal, the tab connecting portion is configured to connect the tab, and the tab connecting portion has a first surface facing the body. The tab includes a first section connected to the body, a second section fixed on the first surface, and a corner section connected between the first section and the second section, and the corner section exceeds the first surface in a direction from the body toward the connecting part.

In such battery cell, the corner section formed by bending the tab exceeds the first surface in the direction from the body toward the connecting part, so that part of the tab is accommodated in space of the first surface away from the body, so as to reduce space occupied by the tab on a side of the first surface close to the body, thereby reducing distance between the body and the connecting part, which makes all parts more compact and increases space proportion of the body, that is, increasing proportions of positive and negative electrode active substances, so as to increase volumetric energy density.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application.

The battery cell disclosed in the embodiments of this application may be used without limitation in electric devices such as vehicles, ships, or aircrafts. The battery cell disclosed in this application may be used to constitute a power supply system of that electric device.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of the application being a vehicle is used as an example for description of the following embodiments.

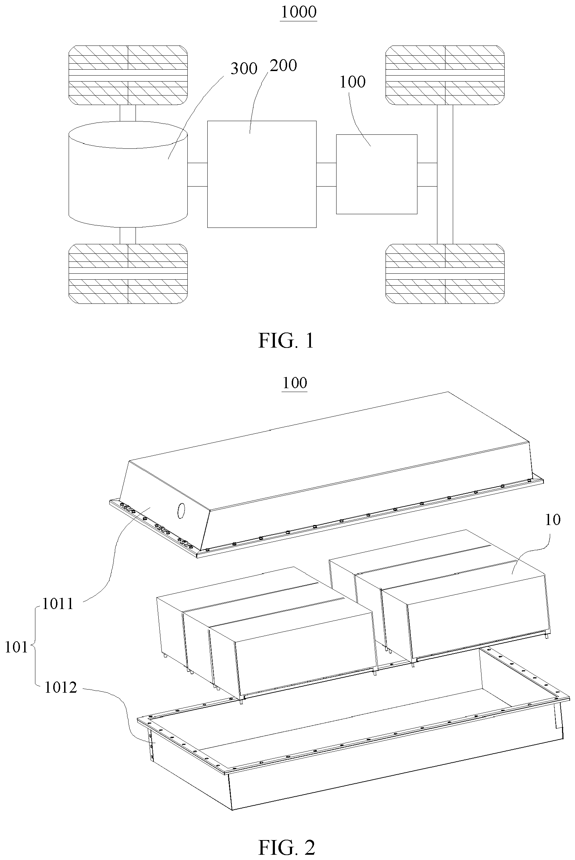

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 100 according to some embodiments of this application. The battery 100 includes a box 101 and a battery cell 10, where the battery cell 10 is accommodated in the box 101. The box 101 is configured to provide an accommodating space for the battery cell 10. The box 101 may be a variety of structures. In some embodiments, the box 101 may include a first portion 1011 and a second portion 1012. The first portion 1011 and the second portion 1012 fit together so that the first portion 1011 and the second portion 1012 jointly define a space for accommodating the battery cell 10. The second portion 1012 may be a hollow structure with one side open, and the first portion 1011 may be a plate structure, where the first portion 1011 covers the open side of the second portion 1012 for the first portion 1011 and the second portion 1012 to jointly define an accommodating space; or alternatively, the first portion 1011 and the second portion 1012 may both be hollow structures with one side open, where the open side of the first portion 1011 is engaged with the open side of the second portion 1012.

In the battery 100, the battery cell 10 may be present in plurality, and the plurality of battery cells 10 may be connected in series, parallel, or series-parallel, where being connected in series-parallel means a combination of series and parallel connections of the plurality of battery cells 10. The plurality of battery cells 10 may be directly connected in series, parallel or series-parallel, and then an entirety of the plurality of battery cells 10 is accommodated in the box 101; or certainly, the battery 100 may be formed by a plurality of battery cells 10 being connected in series, parallel or series-parallel first to form a battery module and then a plurality of battery modules being connected in series, parallel or series-parallel to form an entirety which is accommodated in the box 101. The battery 100 may further include other structures. For example, the battery 100 may further include a busbar configured to implement electrical connection between the plurality of battery cells 10.

Each battery cell 10 may be a secondary battery or a primary battery, and may be a lithium-sulfur battery, a sodium-ion battery, or a magnesium-ion battery, without being limited thereto.

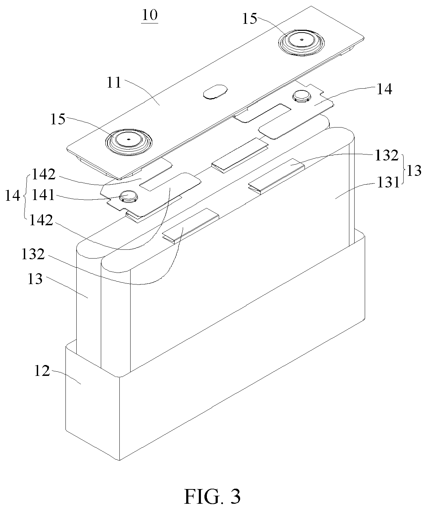

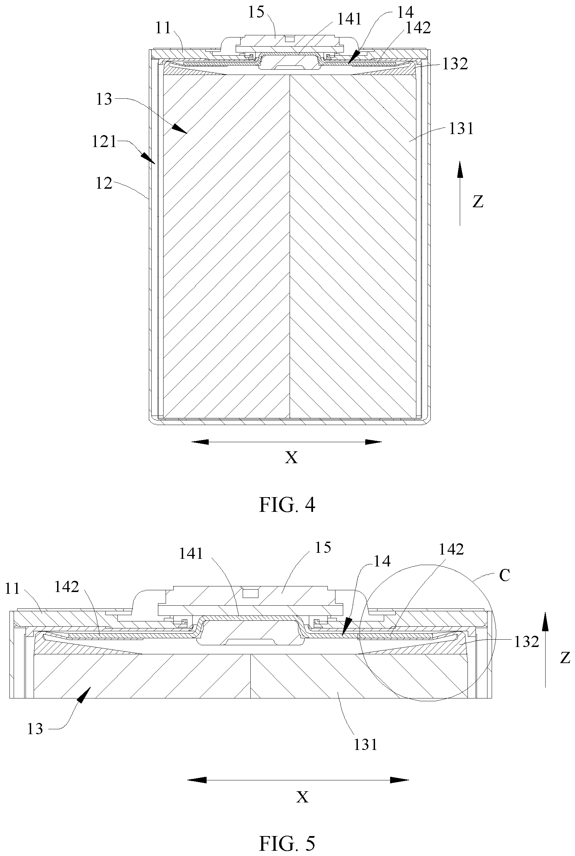

Referring to FIG. 3 and FIG. 4, FIG. 3 is a schematic structural exploded view of a battery cell 10 according to some embodiments of this application; and FIG. 4 is a cross-sectional view of a battery cell 10 according to some embodiments of this application. FIG. 4 is a stepwise cross-sectional view intended to illustrate a connection manner between a connecting part 14 and an electrode terminal 15 and a connection manner between the connecting part 14 and a tab 132. The battery cell 10 refers to a smallest element constituting the battery 100. As shown in FIG. 3 and FIG. 4, the battery cell 10 includes an end cover 11, a housing 12, an electrode assembly 13, the connecting part 14 and the electrode terminal 15.

The end cover 11 refers to a component that covers an opening of the housing 12 to isolate an internal environment of the battery cell 10 from an external environment thereof. A shape of the end cover 11 is not limited and may be adapted to a shape of the housing 12 to fit the housing 12. In some embodiments, the end cover 11 may be made of a material with given hardness and strength (for example, aluminum alloy), so that the end cover 11 is less likely to deform when subjected to extrusion and collision, allowing the battery cell 10 to have higher structural strength and enhanced safety performance. The end cover 11 may be provided with a pressure relief mechanism configured to relieve internal pressure when the internal pressure or a temperature of the battery cell 10 reaches a threshold. The end cover 11 may also be made of various materials, such as copper, iron, aluminum, stainless steel, aluminum alloy, and plastic, which are not particularly limited in the embodiments of this application. In some embodiments, an insulator may also be provided at an inner side of the end cover 11. The insulator may be configured to isolate an electrical connection component in the housing 12 from the end cover 11 to reduce a risk of short circuit. For example, the insulator may be made of plastic, a rubber, or the like.

The housing 12 is an assembly configured to form an internal environment of the battery cell 10 together with the end cover 11, where the formed internal environment may be configured to accommodate the electrode assembly 13, an electrolyte, and other components. The housing 12 and the end cover 11 may be independent components, and an opening may be provided in the housing 12, so that the end cover 11 can cover the opening to form the internal environment of the battery cell 10. The end cover 11 and the housing 12 are not limited and may also be integrated. Specifically, the end cover 11 and the housing 12 may form a shared connection surface before other components are disposed inside the housing, and then the end cover 11 covers the housing 12 when inside of the housing 12 needs to be enclosed. A shape of the housing 12 may be determined according to a specific shape and size of the electrode assembly 13. The housing 12 may be made of various materials, such as copper, iron, aluminum, stainless steel, aluminum alloy, and plastic, which are not particularly limited in the embodiments of this application.

The electrode assembly 13 is a component in which electrochemical reactions occur in the battery cell 10. The housing 12 may include one or more electrode assemblies 13. The electrode assembly 13 is mainly formed by winding or stacking a positive electrode plate and a negative electrode plate, and a separator is generally provided between the positive electrode plate and the negative electrode plate. A body 131 of the electrode assembly 13 includes parts of the positive electrode plate and the negative electrode plate with active substances and the separator, while parts of the positive electrode plate and the negative electrode plate without active substances separately constitute a tab 132. A positive tab and a negative tab may both be located at one end of the body 131 or be located at two ends of the body 131 respectively. In a charge and discharge process of the battery 100, a positive electrode active substance and a negative electrode active substance react with the electrolyte, and the tabs 132 are connected to the electrode terminals 15 via the connecting part 14 to form a current loop.

The electrode terminal 15 is disposed on the end cover 11, and the electrode terminal 15 is electrically connected to the electrode assembly 13 via the connecting part 14 for outputting or inputting electrical energy of the battery cell 10.

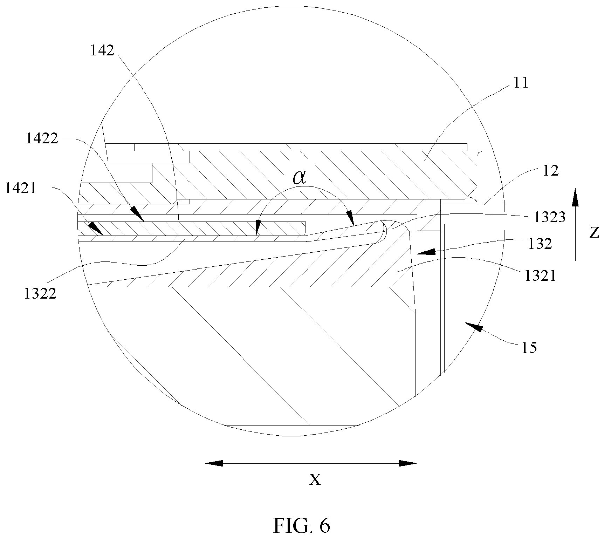

According to some embodiments of this application, referring to FIG. 5 and FIG. 6, FIG. 5 is a partial view of FIG. 4, and FIG. 6 is a first enlarged view of position C in FIG. 5. This application provides a battery cell 10. As shown in FIG. 5 and FIG. 6, the battery cell 10 includes an electrode assembly 13 and a connecting part 14. The electrode assembly 13 includes a body 131 and a tab 132. The connecting part 14 includes a terminal connecting portion 141 and a tab connecting portion 142, where the terminal connecting portion 141 is configured to connect an electrode terminal 15, the tab connecting portion 142 is configured to connect the tab 132, and the tab connecting portion 142 has a first surface 1421 facing the body 131. The tab 132 includes a first section 1321 connected to the body 131, a second section 1322 fixed on the first surface 1421, and a corner section 1323 connected between the first section 1321 and the second section 1322, and the corner section 1323 exceeds the first surface 1421 in a direction Z from the body 131 toward the connecting part 14.

In the battery cell 10, the connecting part 14 and the body 131 are spaced apart in a thickness direction of an end cover 11, and the direction from the body 131 toward the connecting part 14 is a direction indicated by letter Z in the figure, where the direction Z is perpendicular to the connecting part 14, or may be the thickness direction of the end cover 11.

In an assembling process of the battery cell 10, after being connected to the first surface 1421 of the tab connecting portion 142, the tab 132 needs to be bent, where a bending part of the bent tab 132 forms the corner section 1323. When the electrode assembly 13 is put into the housing 12, and the end cover 11 and the housing 12 are encapsulated, the corner section 1323 exceeds the first surface 1421 in the direction Z from the body 131 toward the connecting part 14.

The connecting part 14 is a conductive component configured to connect the tab 132 and the electrode terminal 15, where the terminal connecting portion 141 is configured to connect an electrode terminal 15, and the tab connecting portion 142 is configured to connect the tab 132, so as to implement electrical connection between the tab 132 and the electrode terminal 15. The first surface 1421 is a surface of the connecting part 14 facing the body 131, that is, a surface of the connecting part 14 close to the body 131.

In the battery cell 10 according to the embodiments of this application, the corner section 1323 exceeds the first surface 1421 in the direction Z from the body 131 toward the connecting part 14, so that part of the tab 132 is accommodated in space of the first surface 1421 away from the body 131, so as to reduce space occupied by the tab 132 on a side of the first surface 1421 close to the body 131, thereby reducing distance between the body 131 and the connecting part 14, which makes all parts more compact and makes the body 131 closer to the connecting part 14, increasing space occupation of the body 131, that is, increasing proportions of positive and negative electrode active substances, so that the battery cell 10 has high energy density.

According to some embodiments of this application, as shown in FIG. 6, in the direction Z from the body 131 toward the connecting part 14, the corner section 1323 exceeds a second surface 1422 of the tab connecting portion 142 facing away from the body 131.

The second surface 1422 is a surface of a part, that is connected to the second section 1322, of the connecting part 14 facing away from the body 131. In other words, the second surface 1422 and the first surface 1421 are opposite surfaces of the tab connecting portion 142 in a thickness direction of the connecting part 14, where the thickness direction of the connecting part 14 is the thickness direction of the end cover 11.

The corner section 1323 exceeds the second surface 1422 so that more part of the tab 132 is accommodated in the space of the first surface 1421 away from the body 131, which further reduces the distance between the body 131 and the connecting part 14 and further increases space proportion of the body 131, that is, increasing proportions of positive and negative electrode active substances, so as to increase energy density of the battery cell 10.

According to some embodiments of this application, as shown in FIG. 6, an included angle α between the corner section 1323 and the second section 1322 is an obtuse angle.

As shown in FIG. 6, the angle indicated by α in the figure is the included angle between the corner section 1323 and the second section 1322. As the corner section 1323 exceeds the first surface 1421, and the corner section 1323 extends toward a side of the first surface 1421 facing away from the body, an obtuse angle is formed between the corner section 1323 and the second section 1322. If the angle α between the corner section 1323 and the second section 1322 is small, it is not conducive to the bending of the tab 132, and there is a large contact area between the corner section 1323 and the connecting part 14, which easily causes interference of an end of the connecting part 14 to the tab 132, and in severe cases, the connecting part 14 damages the tab 132; or if the angle α between the corner section 1323 and the second section 1322 is large, the corner section 1323 occupies large space, which affects utilization of internal space of the battery cell 10 and affects energy density of the battery cell 10.

A disposition manner of the corner section 1323 and the second section 1322 makes interference between the connecting part 14 and the corner section 1323 less, which reduces damage of the connecting part 14 to the tab 132 and facilitates bending of the tab 132, thereby properly using the internal space of the battery cell 10.

According to some embodiments of this application, as shown in FIG. 4 and FIG. 6, the battery cell 10 further includes a housing 12. The housing 12 has an accommodating chamber 121, where at least part of the connecting part 14 and the electrode assembly 13 are accommodated in the accommodating chamber 121. The connecting part 14 further includes an end surface 143 in a thickness direction X of the electrode assembly 13, and the corner section 1323 is located between the end surface 143 and an inner wall of the housing 12.

The accommodating chamber 121 has an opening for the electrode assembly 13 to be disposed in the accommodating chamber 121. The electrode assembly 13 is accommodated in the accommodating chamber 121, so that the electrode assembly 13 can react with an electrolyte.

At least part of the connecting part 14 is accommodated in the accommodating chamber 121. For example, one part of the connecting part 14 is accommodated in the accommodating chamber 121, and the other part of the connecting part 14 is accommodated in a through hole of the housing 12 to facilitate connection with the electrode terminal 15; or the entire connecting part 14 is accommodated in the accommodating chamber 121, and the electrode terminal 15 extends into the accommodating chamber 121 to connect with the connecting part 14.

The electrode assembly 13 is flat, and the electrode assembly 13 has a thickness direction. In the figure, a direction indicated by letter X is the thickness direction of the electrode assembly 13.

The connecting part 14 has the first surface 1421 facing the body 131 and the second surface 1422 facing away from the body 131, and the end surface 143 connects the first surface 1421 and the second surface 1422.

The corner section 1323 is located between the end surface 143 of the connecting part 14 in the thickness direction X of the electrode assembly 13 and the inner wall of the housing 12. In other words, in a plane perpendicular to the thickness direction X of the electrode assembly 13, a projection of the corner section 1323 overlaps that of the end surface 143. For example, the projection of the corner section 1323 is located in the projection of the end surface 143, or part of the projection of the corner section 1323 overlaps the projection of the end surface 143. The first surface 1421 of the connecting part 14 facing the body 131 and the second surface 1422 of the connecting part 14 facing away from the body 131 are two interfaces of the projection of the foregoing end surface 143. When the corner section 1323 exceeds the first surface 1421 of the connecting part 14 facing the body 131 but does not exceed the second surface 1422 of the connecting part 14 facing away from the body 131, the projection of the corner section 1323 is located in the projection of the end surface 143; or when the corner section 1323 exceeds the second surface 1422 of the connecting part 14 facing away from the body 131, part of the projection of the corner section 1323 overlaps the projection of the end surface 143.

The corner section 1323 being disposed between the end surface 143 and the inner wall of the housing 12 properly uses internal space of the accommodating chamber 121 and reduces space occupation, thereby ensuring that the battery cell 10 has high energy density.

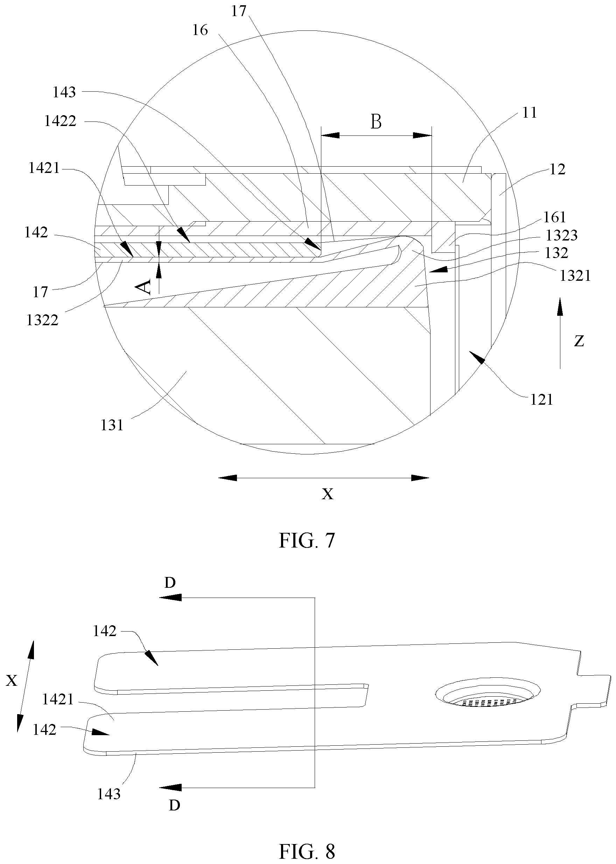

Referring to FIG. 7, FIG. 7 is a second enlarged view of position C in FIG. 5. According to some embodiments of this application, as shown in FIG. 4 and FIG. 7, the battery cell 10 further includes an end cover 11 and an insulator 16. The end cover 11 seals the housing 12. At least part of the insulator 16 is disposed between the end cover 11 and the connecting part 14 to isolate the end cover 11 from the connecting part 14.

The end cover 11 is configured to cover the opening of the housing 12 to connect with the housing 12 to seal the accommodating chamber 121.

The insulator 16 is an insulation part configured to implement insulation between the end cover 11 and the connecting part 14. At least part of the insulator 16 is disposed between the end cover 11 and the connecting part 14. For example, one part of the insulator 16 is disposed between the end cover 11 and the connecting part 14, the other part of the insulator 16 extends toward the opposite direction of the direction Z and abuts against the body 131; or the entire insulator 16 is disposed between the end cover 11 and the connecting part 14.

The insulator 16 is used to isolate the end cover 11 from the connecting part 14 to avoid internal short circuit, thereby guaranteeing safety of the battery cell 10.

According to some embodiments of this application, as shown in FIG. 7, a flange 161 protruding toward the body 131 is formed on an edge of the insulator 16 in the thickness direction X of the electrode assembly 13, and the flange 161 is located between the corner section 1323 and the housing 12.

The flange 161 is located on the edge of the insulator 16 in the thickness direction X of the electrode assembly 13 and protrudes toward the body 131. In other words, in the thickness direction X of the electrode assembly 13, the flange 161 is located between the end surface 143 and the inner wall of the housing 12.

The flange 161 being located between the corner section 1323 and the housing 12 means that the corner section 1323 is located between the end surface 143 and the flange 161.

The flange 161 being located between the corner section 1323 and the housing 12 can isolate the corner section 1323 from the housing 12 to avoid internal short circuit, thereby guaranteeing safety of the battery cell 10.

According to some embodiments of this application, as shown in FIG. 7, thickness of the tab 132 is A, and distance between the end surface 143 and the flange 161 is B, where 1%≤A/B≤20%.

The tab 132 is formed by a plurality of layers of tab 132, and the thickness A of the tab 132 is the number of layers of tab 132 multiplied by a thickness of each layer of tab 132. The end surface 143 and the flange 161 are arranged in parallel, and the distance B between the end surface 143 and the flange 161 may be distance between a point on the end surface 143 and the flange 161 in a direction perpendicular to the end surface 143.

A larger thickness A of the tab 132 indicates a larger distance B between the end surface 143 and the flange 161, which facilitates accommodation of the corner section 1323. When the thickness A of the tab 132 is small, the tab 132 is easy to bend, and correspondingly, the distance B between the end surface 143 and the flange 161 may be small. A ratio relationship between the thickness A of the tab 132 and the distance B between the end surface 143 and the flange 161 satisfying 1%≤A/B≤20% can not only facilitate reduction of difficulty of bending the tab 132, but also facilitate accommodation of the corner section 1323, so as to avoid interference between the corner section 1323 and other components.

In some embodiments, the ratio relationship between the thickness A of the tab 132 and the distance B between the end surface 143 and the flange 161 satisfies 2%≤A/B≤8%, which ensures that the tab 132 is easy to bend and facilitates accommodation of the corner section 1323 between the end surface 143 and the flange 161.

According to some embodiments of this application, as shown in FIG. 7, the corner section 1323 abuts against a side of the insulator 16 facing away from the end cover 11.

Since the insulator 16 is configured to isolate the end cover 11 from the connecting part 14, the side of the insulator 16 facing away from the end cover 11 is a side of the insulator 16 facing the body 131, and the corner section 1323 abutting against the side of the insulator 16 facing away from the end cover 11 means that the corner section 1323 abuts against the side of the insulator 16 facing the body 131.

The corner section 1323 abutting against the insulator 16 can further reduce the distance between the body 131 and the connecting part 14, so that the body 131 occupies a high proportion of the internal space of the battery cell 10, that is, proportions of positive and negative electrode active substances are high, so that the battery cell 10 has high energy density.

According to some embodiments of this application, as shown in FIG. 7, to avoid internal short circuit, after the tab 132 is connected to the connecting part 14, two surfaces of the tab 132 in the thickness direction are bonded with adhesive tape 17, that is, two sides of a connection position of the tab 132 and the connecting part 14 are bonded with the adhesive tape 17. For example, the adhesive tape 17 on a side of the tab 132 is bonded to the second surface 1422 of the connecting part 14, and the corner section 1323 abuts against the side of the insulator 16 facing the body 131 via the adhesive tape 17.

Referring to FIG. 8, FIG. 8 is a schematic structural diagram of a connecting part 14 according to some embodiments of this application. According to some embodiments of this application, as shown in FIG. 3 and FIG. 4, the battery cell 10 has two electrode assemblies 13, where positive electrode tabs of the two electrode assemblies 13 are connected to one connecting part 14, and negative electrode tabs of the two electrode assemblies 13 are connected to another connecting part 14. As shown in FIG. 5 and FIG. 8, the connecting part 14 includes two tab connecting portions 142, where the two tab connecting portions 142 are spaced apart in the thickness direction X of the electrode assembly 13, and the two tab connecting portions 142 are connected to the tabs 132 of the two electrode assemblies 13 respectively.

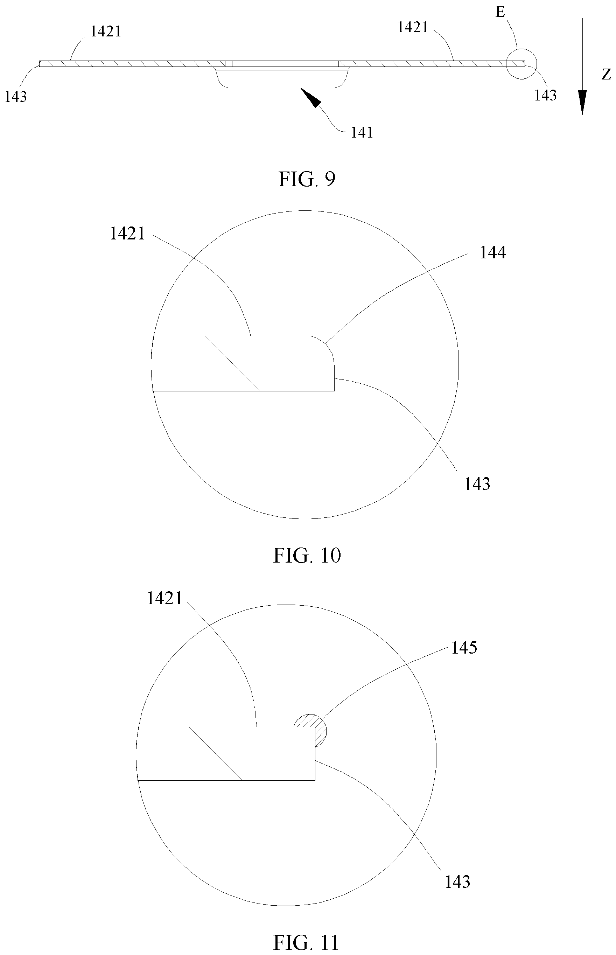

Referring to FIG. 9 to FIG. 11, FIG. 9 is a sectional view in the D-D direction in FIG. 8; FIG. 10 is a first enlarged view of position E in FIG. 9, which shows a round corner 144 on the connecting part 14; and FIG. 11 is a second enlarged view of position E in FIG. 9, which shows an elastic member 145 on the connecting part 14. According to some embodiments of this application, as shown in FIG. 9 to FIG. 11, the round corner 144 or the elastic member 145 is provided at an intersection of the first surface 1421 and the end surface 143.

The intersection of the first surface 1421 and the end surface 143 is a position where the tab 132 abuts against the connecting part 14 after the tab 132 is bent, that is, a position of the connecting part 14 corresponding to an intersection of the second section 1322 and the corner section 1323.

As the corner section 1323 is located between the end surface 143 and the inner wall of the housing 12, and the tab 132 abuts against the intersection of the first surface 1421 and the end surface 143, during bending of the tab 132, the intersection is prone to cut the tab 132, which affects current flow capacity of the tab 132 and affects service life of the battery cell 10.

As shown in FIG. 10, the round corner 144 may be provided at the intersection of the first surface 1421 and the end surface 143, which can implement smooth transition between the first surface 1421 and the end surface 143, thereby reducing damage of the intersection to the tab 132.

As shown in FIG. 11, the elastic member 145 may also be provided at the intersection of the first surface 1421 and the end surface 143, where the elastic member 145 may be made of silicone, foam, nitrile butadiene rubber, neoprene, isobutylene isoprene rubber, ethylene propylene rubber, synthetic resin, synthetic rubber, or the like. The elastic member 145 acts as a buffer and can deform when being stressed to prevent the intersection of the first surface 1421 and the end surface 143 from cutting the tab 132. The elastic member 145 is connected to the connecting part 14 in various manners, which may be a manner of bonding by adhesive, or may be a manner of forming by sprayed and solidified glue. In some embodiments, glue is sprayed at the intersection of the first surface 1421 and the end surface 143, and the glue solidifies to form the elastic member 145.

The round corner 144 or elastic member 145 provided at the intersection of the first surface 1421 and the end surface 143 can buffer friction between the tab 132 and the connecting part 14 and prevent the tab 132 from being cut, thereby guaranteeing service life of the battery cell 10.

According to some embodiments of this application, as shown in FIG. 5 and FIG. 9, the terminal connecting portion 141 protrudes relative to a side of the tab connecting portion 142 facing away from the body 131.

That the terminal connecting portion 141 protrudes relative to a side of the tab connecting portion 142 facing away from the body 131 means that the terminal connecting portion 141 protrudes relative to the tab connecting portion 142 in the direction Z, and that the terminal connecting portion 141 is away from the body 131 relative to the tab connecting portion 142.

The terminal connecting portion 141 protruding toward the side facing away from the body 131 not only facilitates connection with the electrode terminal 15, but also avoids protruding toward the body 131 which occupies internal space of the battery cell 10, thereby guaranteeing energy density of the battery cell 10.

According to some embodiments of this application, this application further provides a battery 100 including the battery cell 10 described in any one of the foregoing solutions.

According to some embodiments of this application, this application further provides an electric device including the battery cell 10 described in any one of the foregoing solutions, where the battery cell 10 is configured to supply electric energy to the electric device.

According to some embodiments of this application, referring to FIG. 3 to FIG. 7, this application provides a battery cell 10. The battery cell 10 includes an end cover 11, a housing 12, an electrode assembly 13, a connecting part 14, an electrode terminal 15, and an insulator 16. The housing 12 includes an accommodating chamber 121 with an opening, and the end cover 11 covers the opening to seal the accommodating chamber 121 of the housing 12. The electrode assembly 13 and at least part of the connecting part 14 are accommodated in the accommodating chamber 121 of the housing 12. The connecting part 14 includes a terminal connecting portion 141 and a tab connecting portion 142, where the terminal connecting portion 141 is configured to connect an electrode terminal 15, and the tab connecting portion 142 is configured to connect a tab 132 and has a first surface 1421 facing a body 131. The electrode assembly 13 includes the body 131 and the tab 132, where the tab 132 includes a first section 1321 connected to the body 131, a second section 1322 fixed on the first surface 1421, and a corner section 1323 connected between the first section 1321 and the second section 1322. The body 131 and the connecting part 14 are arranged in parallel and are spaced apart in a thickness direction of the end cover 11. The corner section 1323 exceeds the first surface 1421 in a direction Z from the body 131 toward the connecting part 14. At least part of the insulator 16 is located between the connecting part 14 and the end cover 11 to isolate the connecting part 14 from the end cover 11. The connecting part 14 further includes an end surface 143 in a thickness direction X of the electrode assembly 13, and a flange 161 protruding toward the body 131 is formed on an edge of the insulator 16 in the thickness direction X of the electrode assembly 13, where the corner section 1323 is located between the end surface 143 and the flange 161, and the flange 161 is located between the corner section 1323 and the housing 12. The corner section 1323 abuts against a side of the insulator 16 facing away from the end cover 11.

The corner section 1323 exceeds the first surface 1421 and abuts against a side of the insulator 16 facing away from the end cover 11, which reduces distance between the body 131 and the connecting part 14 and increases space occupied by the body 131, that is, increasing proportions of positive and negative electrode active substances, so as to ensure high energy density.

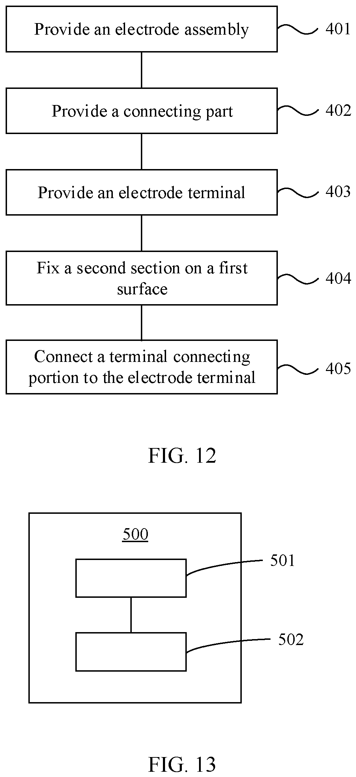

FIG. 12 is a schematic flowchart of a manufacturing method of battery cell according to some embodiments of this application. According to some embodiments of this application, this application provides a manufacturing method of battery cell. As shown in FIG. 12, the manufacturing method of battery cell may include the following steps.

401. Provide an electrode assembly 13, where the electrode assembly 13 includes a body 131 and a tab 132, and the tab 132 includes a first section 1321, a second section 1322, and a corner section 1323 connected between the first section 1321 and the second section 1322.

402. Provide a connecting part 14, where the connecting part 14 includes a terminal connecting portion 141 and a tab connecting portion 142, and the tab connecting portion 142 has a first surface 1421 facing the body 131.

403. Provide an electrode terminal 15.

404. Fix the second section 1322 on the first surface 1421 and bend the tab 132 so that the corner section 1323 exceeds the first surface 1421 in a direction Z from the body 131 toward the connecting part 14.

405. Connect the terminal connecting portion 141 to the electrode terminal 15.

It should be pointed out that an order of the step "401. Provide an electrode assembly 13", the step "402. Provide a connecting part 14", and the step "403. Provide an electrode terminal 15" is not limited. In some embodiments, an order of the step "402. Provide a connecting part 14", the step "401. Provide an electrode assembly 13", and the step "403. Provide an electrode terminal 15" may be followed, or an order of the step "403. Provide an electrode terminal 15", the step "401. Provide an electrode assembly 13", and the step "402. Provide a connecting part 14" may also be followed.

FIG. 13 is a schematic block diagram of a manufacturing device 500 of battery cell according to some embodiments of this application. According to some embodiments of this application, this application provides a manufacturing device 500 of battery cell. As shown in FIG. 13, the manufacturing device 500 of battery cell includes a providing module 501 and an assembling module 502. The providing module 501 is configured to provide an electrode assembly 13, provide a connecting part 14, and provide an electrode terminal 15, where the electrode assembly 13 includes a body 131 and a tab 132, and the tab 132 includes a first section 1321, a second section 1322, and a corner section 1323 connected between the first section 1321 and the second section 1322; and the connecting part 14 includes a terminal connecting portion 141 and a tab connecting portion 142, and the tab connecting portion 142 has a first surface 1421 facing the body 131. The assembling module 502 is configured to fix the second section 1322 on the first surface 1421, bend the tab 132 so that the corner section 1323 exceeds the first surface 1421 in a direction Z from the body 131 toward the connecting part 14, and connect the terminal connecting portion 141 to the electrode terminal 15.

Although this application has been described with reference to the preferred embodiments, various modifications to this application and replacements with equivalents of the components herein can be made without departing from the scope of this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A battery cell, comprising:
an electrode assembly, comprising a body and a tab; and
a connecting part, comprising a terminal connecting portion and a tab connecting portion, wherein the terminal connecting portion is configured to connect an electrode terminal, the tab connecting portion is configured to connect the tab, and the tab connecting portion has a first surface facing the body;
wherein the tab comprises a first section connected to the body, a second section fixed on the first surface, and a corner section connected between the first section and the second section, and the corner section exceeds the first surface in a direction from the body toward the connecting part.

2. The battery cell according to claim 1, wherein in the direction from the body toward the connecting part, the corner section exceeds a second surface of the tab connecting portion away from the body.

3. The battery cell according to claim 1 or 2, wherein an included angle between the corner section and the second section is an obtuse angle.

4. The battery cell according to any one of claims 1 to 3, wherein the battery cell further comprises:
a housing, comprising an accommodating chamber, wherein at least part of the connecting part and the electrode assembly are accommodated in the accommodating chamber; and
the connecting part further comprises an end surface in a thickness direction of the electrode assembly, and the corner section is located between the end surface and an inner wall of the housing.

5. The battery cell according to claim 4, wherein the battery cell further comprises:
an end cover, sealing the housing; and
an insulator, wherein at least part of the insulator is disposed between the end cover and the connecting part to isolate the end cover from the connecting part.

6. The battery cell according to claim 5, wherein a flange protruding toward the body is formed on an edge of the insulator in the thickness direction of the electrode assembly, and the flange is located between the corner section and the housing.

7. The battery cell according to claim 6, wherein thickness of the tab is A, and distance between the end surface and the flange is B, wherein 1%≤A/B≤20%.

8. The battery cell according to any one of claims 5 to 7, wherein the corner section abuts against a side of the insulator facing away from the end cover.

9. The battery cell according to any one of claims 4 to 8, wherein a round corner or an elastic member is provided at an intersection of the first surface and the end surface.

10. The battery cell according to any one of claims 1 to 8, wherein the terminal connecting portion protrudes relative to a side of the tab connecting portion facing away from the body.

11. A battery, comprising the battery cell according to any one of claims 1 to 10.

12. An electric device, comprising the battery according to any one of claims 1 to 10, wherein the battery is configured to supply electric energy.

13. A manufacturing method of battery cell, comprising:
providing an electrode assembly, wherein the electrode assembly comprises a body and a tab, and the tab comprises a first section, a second section, and a corner section connected between the first section and the second section;
providing a connecting part comprising a terminal connecting portion and a tab connecting portion, wherein the tab connecting portion has a first surface facing the body;
providing an electrode terminal;
fixing the second section on the first surface and bending the tab so that the corner section exceeds the first surface in a direction from the body toward the connecting part; and
connecting the terminal connecting portion to the electrode terminal.

14. A manufacturing device of battery cell, comprising:
a providing module, configured to provide an electrode assembly, provide a connecting part, and provide an electrode terminal, wherein the electrode assembly comprises a body and a tab, and the tab comprises a first section, a second section, and a corner section connected between the first section and the second section; and the connecting part comprises a terminal connecting portion and a tab connecting portion, and the tab connecting portion has a first surface facing the body; and
an assembling module, configured to fix the second section on the first surface, bend the tab so that the corner section exceeds the first surface in a direction from the body toward the connecting part, and connect the terminal connecting portion to the electrode terminal.
